# EUROPÄISCHE PATENTANMELDUNG

(11) **EP 4 550 236 A1**
(43) Veröffentlichungstag der Anmeldung: **07.05.2025**
(21) Anmeldenummer: 23206600.1
(22) Anmeldetag: 30.10.2023
(51) Int. Cl.: G06Q 10/08

(54) **VERFAHREN ZUM DIGITALEN KENNZEICHNEN VON PHYSISCHEN WAREN**

(71) Anmelder: Boller, Felix Adrian, 8037 Zürich (CH)
(72) Erfinder: Boller, Felix Adrian, 8037 Zürich (CH)
(74) Vertreter: Reich, Jochen

(57) **Zusammenfassung**

Die vorliegende Erfindung betrifft ein Verfahren zum dynamischen Bereitstellen von Eigentumsinformation einer physischen Ware, welche es Findern ermöglicht einen Eigentümer einer Ware zu identifizieren und mit diesem Kontakt aufzunehmen. Das Verfahren gibt dem Eigentümer die Möglichkeit seine Information selbst bereitzustellen und hat jeder Zeit Kontrolle über die eigenen Daten. Die Erfindung ist ferner gerichtet auf eine entsprechend ausgestaltete Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die vorliegende Erfindung betrifft ein Verfahren zum dynamischen Bereitstellen von Eigentumsinformation einer physischen Ware, welche es Findern ermöglicht, einen Eigentümer einer Ware zu identifizieren und mit diesem indirekt Kontakt aufzunehmen. Das Verfahren gibt dem Eigentümer die Möglichkeit, seine Information selbst bereitzustellen und er hat jederzeit Kontrolle über die eigenen Daten. Die Erfindung ist ferner gerichtet auf eine entsprechend ausgestaltete Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

Bekannt sind Fundbüros, in denen Finder Waren zu deren Abholung durch den Eigentümer hinterlegen können. Problematisch dabei ist, dass Eigentümer hierbei oftmals nicht identifizierbar und somit nicht kontaktierbar sind. Für eine Kontaktaufnahme müssten sie Information bereitstellen, die aus Datenschutzgründen bedenklich sind.

Es ist daher eine Aufgabe (I) ein Verfahren anzubieten, welches die Probleme im Stand der Technik behebt und einen Dienst bereitstellt, in dem der Eigentümer sicher nachvollziehbar ist und zudem die Kontrolle über seinen bereitgestellten Daten hat. Ferner ist es eine Aufgabe (II) der vorliegenden Erfindung, eine entsprechend eingerichtete Systemanordnung vorzuschlagen. Ferner ist es eine Aufgabe (III) ein Computerprogrammprodukt mit Steuerbefehlen bereitzustellen, welche das Verfahren implementieren beziehungsweise die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum dynamischen Bereitstellen von Eigentumsinformation einer physischen Ware vorgeschlagen, aufweisend ein Bereitstellen der Ware dadurch gekennzeichnet, dass die Ware mit einem einmaligen und maschinenauslesbaren Kennzeichen versehen wird, welches in einer Datenbank mitsamt einem Hinweis auf einen Eigentümer der Ware registriert wird und die Datenbank mittels einer Benutzerschnittstelle von einem mobilen Endgerät durch den Eigentümer editierbar ist.

Vorgeschlagen wird ein digitaler Fundsachenservice. Er basiert auf persönlich zugeteilten Identifikationsnummern (ID), anhand welcher der Eigentümer sein Eigentum markieren kann. Der technische Beitrag liegt unter anderem in folgenden Punkten:
1. Der Eigentümer kann in seinem Onlinekonto mehrere IDs verwalten. Insbesondere auch solche von weiteren Personen bzw. von fremdem Eigentum. Dies ermöglicht die industrielle Anwendung und entspricht einer Neuheit.
2. Das Hinzufügen von weiteren IDs kumuliert die Gesamtnutzungszeit des Accounts, wovon sämtliche darin aufgenommenen IDs profitieren.
3. Der Account ist kompatibel mit vergleichbaren Dienstleistungen von lizenzierten Drittanbietern.
4. Der Account ermöglicht Zugang zu weiteren produktespezifischen Informationen und Features.
5. Die Übertragung von Eigentum an einen neuen Eigentümer.

In der Grundfunktion ist eine persönliche Identifikationsnummer in einem QR-Code oder auf einem digitalen Datenträger wie beispielsweise NFC eingebunden. Diese werden verknüpft mit der E-Mailadresse oder einer anderen Schnittstelle zum Eigentümer. Der Grundträger der ID kann in beliebiger Stückzahl reproduziert werden. Er wird an befestigt oder in die Gegenstände des Eigentümers eingebaut.

Wird bei einem gefundenen Gegenstand die persönliche ID gescannt, öffnet im Browser ein Fenster. Darin kann der Finder den Eigentümer online kontaktieren, indem er seine Kontaktdaten, eine Mitteilung und/oder seine aktuelle Geoposition an die ID des Eigentümers zustellt.

Diese Mitteilung erreicht die Rechenzentrale. Hier verknüpft ein Softwareprogramm die ID des Eigentümers bzw. des Fundgegenstands mit der Schnittstelle des Accountinhabers und leitet die Fundmeldung an den Accountinhaber weiter. Im Normalfall ist der Accountinhaber Eigentümer aller in seinem Account aufgenommenen IDs. Verwaltet der Accountinhaber fremde IDs leitet er die eingetroffene Mitteilung gemäß individueller Abmachung weiter an den Eigentümer der ID, auf welche sich die Mitteilung bezieht.

Der Eigentümer der ID entscheidet nach Empfang der Fundmeldung, ob er sich beim Finder meldet und welche seiner persönlichen Angaben er dem Finder anvertraut. Denn bislang ist dem Finder lediglich die ID des Eigentümers bekannt. Dem Finder seinerseits steht es ebenfalls frei, welche seiner Kontaktangaben er bei der Kontaktaufnahme dem Eigentümer preisgeben will; falls überhaupt. Denn der Service bietet an, dem Eigentümer lediglich eine Mitteilung ohne Kontaktangaben des Finders oder lediglich die Geoposition des Fundortes mitzuteilen.

Dem ehrlichen Finder mit einem Finderlohn zu danken, ist wünschenswert. Der Service schlägt dem Eigentümer eine Größenordnung vor, welche sich am monetären Sachwert des Gegenstands orientiert.

Der Eigentümer der ID kann diese eigens bearbeiten und in beliebiger Stückzahl drucken, lasern, abspeichern. Dies ermöglicht die industrielle Implementierung der Sache. Dies wiederum erfordert die Schaffung von kompatiblen Schnittstellen, was die Erfindung ermöglicht.

Folgende Aspekte können erfindungsgemäß verwirklicht werden:
a) Ein Account auch für Dritte und für fremdes Eigentum

Der Nutzer kann zentral unterschiedliche ID verwalten; auch solche von weiteren Personen und damit von fremdem Eigentum.
b) Kumulierung der Vertragsdauer im Account auf sämtliche IDs

Das erstmalige Zusammenführen jeder weiteren ID im selben Kundenkonto kumuliert die Gesamtvertragsdauer aller im Account registrierten ID um das Zeitguthaben der addierten ID.
c) Kompatibilität der ID von Drittanbietern im Kundenaccount

Das Dashboard im Kundenaccount verschafft dem Kunden einen Überblick, über all seine registrierten IDs. Dabei hat ein externer Supplier die Möglichkeit neben seiner ID sein Logo einblenden zu lassen.

Wird der digitale Service von der vorliegenden Erfindung, genannt "found & scan" oder kurz "fas", von anderen Dienstleistern (Supplier) genutzt, stellt found & scan diesen eigene IDs zur Verfügung. Diese IDs sind im Kundenaccount von found & scan kompatibel hinzufügbar.
d) Kompatibilität des Aufladevorgangs von einem Viertanbieter nicht alleine auf eine einzelne ID sondern gesamthaft auf alle IDs im Kundenaccount

Die Anbieter von mit IDs versehenen physischen Produkten wollen in der Regel den Kontakt zur so erworbenen Kundschaft weiter pflegen. Sie werden dem Kunden Zeitguthaben verkaufen oder schenken, welche die Aktivität der ID wie ein Vertrag um eine gewisse Laufzeit erneuert. Dieses Zeitguthaben wird schlussendlich dem Account hinzugefügt. Davon profitieren alle darin aufgelisteten IDs, auch solche von anderen Anbietern.
e) ID-Board als Schnittstelle zu spezifischen Produkteinformationen

Über das Dashboard hinaus sind die IDs auf einer anderen Programmierebene mit dem ID-Board ergänzt. Der User erhält Zugang zu den dort angesiedelten produktespezifischen Informationen. Der Supplier kann dieses ID-Board seinen ästhetischen und inhaltlichen Wünschen nach gestalten lassen. Dies eröffnet die Möglichkeit des Einbringens von produktebezogenen Features. Solche Features können sein:
- Notizfeld für den User
- Kundenidentifikation
- Produktzertifikate wie Herkunftsnachweise, Bedienungsanleitung, etc.
- Diverse weitere... f) Fernaktivierung der ID durch Verkaufspersonal

Sollte ein industrieller Supplier von found & scan seine in ein physisches Produkt eingebauten IDs über ein Kaufhaus anbieten, ist die ID der Ware noch nicht aktiviert. Dies erhöht die Sicherheiten vor Diebstahl und vor Warenfälschungen und begünstigt die Produkteregistrierung. Um die erworbene ID freizuschalten besteht hier bei der einen Art von Ware die Möglichkeit, den Aktivierungscode verdeckt der Ware hinzuzufügen. Bei einer anderen Art von Ware besteht diese Möglichkeit nicht. Hier ist eine andere Möglichkeit der Aktivierung zu schaffen. Diese können sein:
- Über eine Applikation kann der registrierte Eigentümer die ID der verkauften Ware erfassen und den Aktivierungscode entweder dem Käufer zustellen oder diesen vor Ort aktivieren.
- Über eine ins Kassensystem eingebundene Software kann die ID erworbene Ware aktiviert werden.
g) Übertragung einer ID auf den Account einer anderen Person

Der Markt des Gebrauchtwarenhandels nimmt zu. Dementsprechend müssen allfällige Güter, welche mit der ID versehen und aktiviert sind eine Übertragbarkeit der ID an einen neuen Eigentümer ermöglichen.

Die Aufgabe wird auch gelöst durch eine Systemanordnung zum dynamischen Bereitstellen von Eigentumsinformation einer physischen Ware, aufweisend eine Schnittstelle eingerichtet zum Bereitstellen der Ware dadurch gekennzeichnet, dass die Ware mit einem einmaligen und maschinenauslesbaren Kennzeichen mittels einer Kennzeichnungseinrichtung versehen ist, welches in einer Datenbank mitsamt einem Hinweis auf einen Eigentümer der Ware in einem Datenspeicher registriert ist und die Datenbank mittels einer Benutzerschnittstelle von einem mobilen Endgerät durch den Eigentümer mittels einer Schnittstelleneinheit editierbar ist

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Systemanordnung, Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und technische Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung;
- Figur 2:: ein Bildschirmfoto einer prototypischen Implementierung des Verfahrens gemäß dem Aspekt "Neue ID hinzufügen" der vorliegenden Erfindung;
- Figur 3:: ein weiteres Bildschirmfoto einer prototypischen Implementierung des Verfahrens gemäß dem Aspekt "Account aufladen" der vorliegenden Erfindung;
- Figur 4:: ein weiteres Bildschirmfoto einer prototypischen Implementierung des Verfahrens gemäß dem Aspekt "Account" der vorliegenden Erfindung; und
- Figur 5:: ein weiteres Bildschirmfoto einer prototypischen Implementierung des Verfahrens gemäß dem Aspekt "Dashboard" der vorliegenden Erfindung.

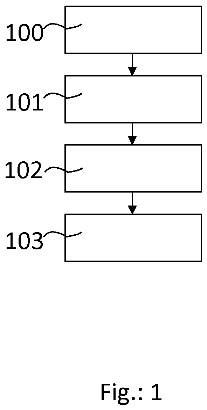

Figur 1 zeigt in einem schematischen Ablaufdiagramm ein Verfahren zum dynamischen Bereitstellen von Eigentumsinformation einer physischen Ware, aufweisend ein Bereitstellen 100 der Ware dadurch gekennzeichnet, dass die Ware mit einem einmaligen und maschinenauslesbaren Kennzeichen versehen 101 wird, welches in einer Datenbank mitsamt einem Hinweis auf einen Eigentümer der Ware registriert wird 102 und die Datenbank mittels einer Benutzerschnittstelle von einem mobilen Endgerät durch den Eigentümer editierbar 103 ist.

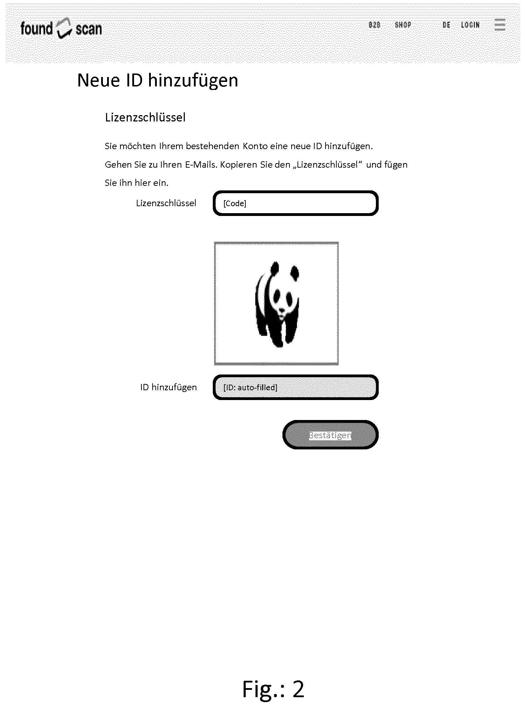

Figur 2 zeigt das Anlegen einer neuen ID vom Benutzerkonto aus (kurz Account), wobei ein Account, mehrere Identitäten aufnehmen kann. Somit kann ein Benutzer unterschiedliche Daten bereitstellen und ein lizenzierter Supplier wiederum kann gemäß unterschiedlicher Waren dem User Daten in unterschiedlichem Umfang bereitstellen.

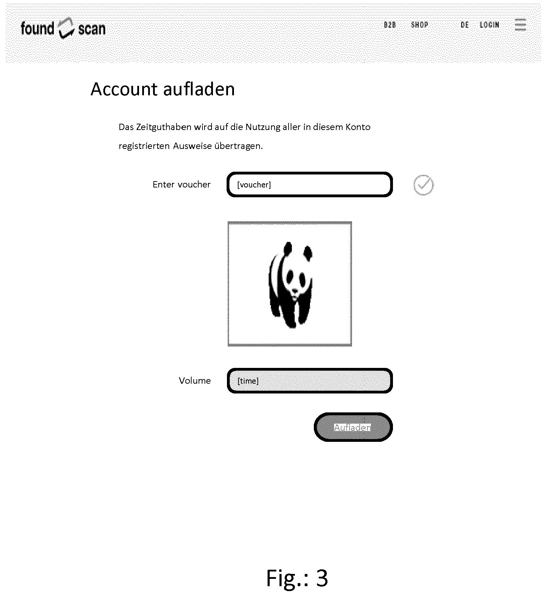

Figur 3 zeigt, dass der Dienst, also ein Konto oder eine Identität, eine zeitlich limitierte Gültigkeit aufweisen kann. Dies hat den Vorteil des verbesserten Datenschutzes.

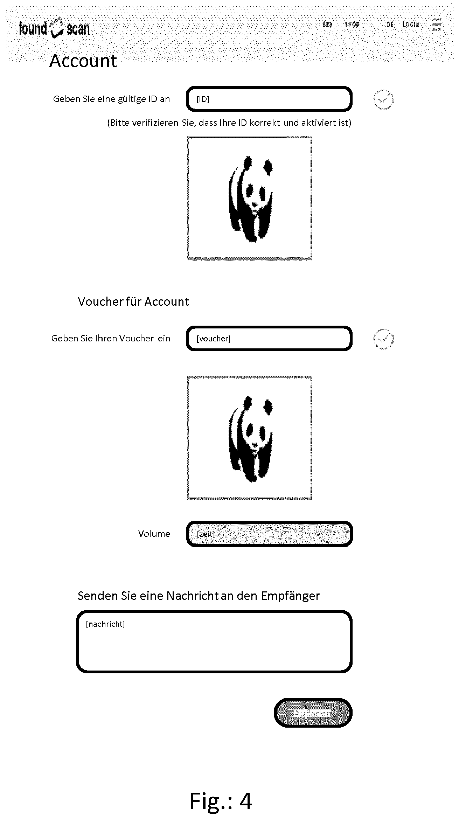

Figur 4 zeigt, dass ohne Login in seinen Account der Benutzer mittels Vouchers die Vertragsdauer seines Accounts und damit auf sämtliche darin erfassten IDs um das Guthaben des Vouchers verlängern und seine Handlung mit einer Notiz ergänzen kann.

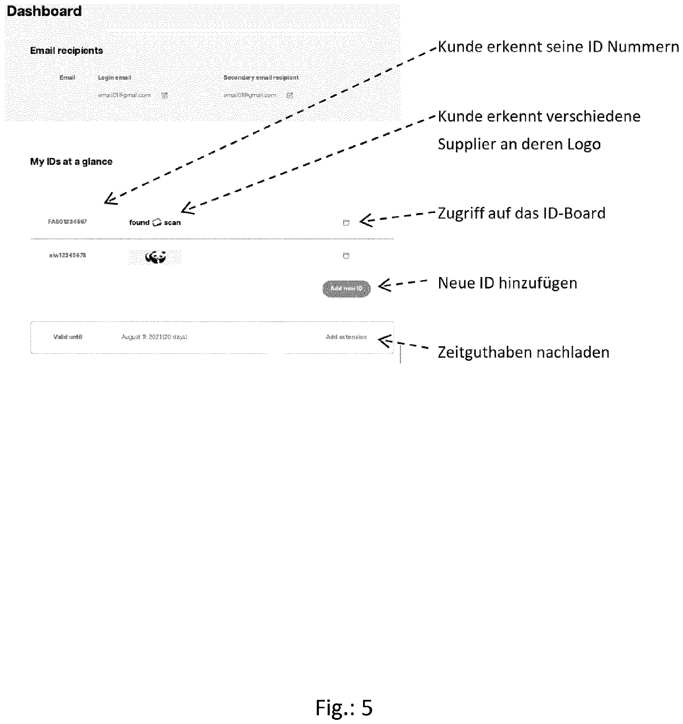

Figur 5 zeigt, dass der Benutzer seine Daten selbst verwalten kann und somit jederzeit Kontrolle über seine Daten hat. Oben können Kontaktdaten eingegeben werden und unten können unterschiedliche Identitäten verwaltet werden. Eine einzelne erfasste Identität kann im Rahmen der vorliegenden Erfindung auch als Kennung oder ID bezeichnet werden, welche sich auf die physischen Waren beziehen.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

## Patentansprüche

1. Verfahren zum dynamischen Bereitstellen von Eigentumsinformation einer physischen Ware, aufweisend ein Bereitstellen (100) der Ware **dadurch gekennzeichnet, dass** die Ware mit einem einmaligen und maschinenauslesbaren Kennzeichen versehen (101) wird, welches in einer Datenbank mitsamt einem Hinweis auf einen Eigentümer der Ware registriert wird (102) und die Datenbank mittels einer Benutzerschnittstelle von einem mobilen Endgerät durch den Eigentümer editierbar (103) ist.

2. Verfahren nach Anspruch 1, **dadurch gekennzeichnet, dass** das Kennzeichen auf einem RFID Chip oder als QR Code gespeichert wird.

3. Verfahren nach Anspruch 1 oder 2, **dadurch gekennzeichnet, dass** die Datenbank eine Kontaktinformation bereitstellt.

4. Verfahren nach einem der vorhergehenden Ansprüche, **dadurch gekennzeichnet, dass** die Hinweise auf einen Eigentümer in einer Historie abgespeichert werden.

5. Verfahren nach Anspruch 4, **dadurch gekennzeichnet, dass** die Historie in einer verketteten Liste elektronisch abgespeichert wird.

6. Systemanordnung zum dynamischen Bereitstellen von Eigentumsinformation einer physischen Ware, aufweisend eine Schnittstelle eingerichtet zum Bereitstellen (100) der Ware **dadurch gekennzeichnet, dass** die Ware mit einem einmaligen und maschinenauslesbaren Kennzeichen mittels einer Kennzeichnungseinrichtung versehen (101) ist, welches in einer Datenbank mitsamt einem Hinweis auf einen Eigentümer der Ware in einem Datenspeicher registriert ist (102) und die Datenbank mittels einer Benutzerschnittstelle von einem mobilen Endgerät durch den Eigentümer mittels einer Schnittstelleneinheit editierbar (103) ist.

7. Computerprogrammprodukt, umfassend Befehle, die bei der Ausführung des Programms durch mindestens einen Computer diesen veranlassen, die Schritte des Verfahrens nach einem der Ansprüche 1 bis 5 auszuführen.

8. Computerlesbares Speichermedium, umfassend Befehle, die bei der Ausführung durch mindestens einen Computer diesen veranlassen, die Schritte des Verfahrens nach einem der Ansprüche 1 bis 5 auszuführen.
